# EUROPEAN PATENT SPECIFICATION

(11) **EP 0 744 417 B1**
(45) Date of publication and mention of the grant of the patent: **29.12.1999**
(21) Application number: 95930712.5
(22) Date of filing: 06.09.1995
(51) Int. Cl.: C08F 212/06, C08F 222/10, C08F 220/06, C08F 220/12, C08F 2/10, D21H 19/20

(54) **PROCESS FOR PRODUCING MULTICOMPONENT STYRENE/(METH)ACRYLATE COPOLYMER**
VERFAHREN ZUR HERSTELLUNG EINES MULTIKOMPONENTEN STYROL/(METH)ACRYLAT COPOLYMEREN
PROCEDE DE PRODUCTION D'UN COPOLYMERE STYRENE/(METH)ACRYLATE MULTICOMPOSANT

(30) Priority: 16.09.1994 JP 24868594
(43) Date of publication of application: 27.11.1996
(73) Proprietor: ARAKAWA CHEMICAL INDUSTRIES, LTD., Chuo-ku, Osaka-shi, Osaka 541 (JP)
(72) Inventor: KAWAKITA, Masayuki, Shijonawate-shi Osaka 575 (JP)
(74) Representative: Weinhold, Peter, Dr.
(86) International application number: JP9501777
(87) International publication number: WO9608522

(56) References cited:
- JP-A- 2 269 895
- JP-A- 4 318 008
- JP-A- 49 102 906

## Description

### Technical Field

The present invention relates to a process for preparing a styrene/(meth)acryl multi-component copolymer, the styrene/(meth)acryl multi-component copolymer prepared by the process and a surface sizing agent for paper, the agent containing the copolymer.

### Background Art

Aqueous solutions of styrene/(meth)acrylic acid copolymers, styrene/maleic acid copolymers or the like have been known as a surface sizing agent for paper. For example, Japanese Unexamined Patent Publication No.102906/1974 discloses a multi-component copolymer of styrene/maleic acid half ester/(meth)acrylic acid, and Japanese Unexamined Patent Publication No. 71205/1974 discloses a multi-component copolymer of styrene/maleic acid monomer/acrylic acid ester. However, these copolymers are highly foamable and are unsatisfactory in sizing effect. For example, when surface sizing agents containing these copolymers are applied to base paper, there arises a problem of application efficiency being readily reduced due to foaming. Another drawback is that a transfer toner is low in adhesion to electrophotography paper coated with the surface sizing agent.

Japanese Unexamined Patent Publication No.318008/1992 discloses a process for preparing styrene/acryl type polymers which process comprises polymerizing monomer components in an alcohol/water mixture in the presence of free-radical generating catalyst. In this process, the catalyst is a water-soluble one and is added portion-wise.

Of processes frequently employed for preparing copolymers, solution polymerization in an alcohol solvent necessitates the removal of a considerable amount of alcohol to produce an unhazardous product and is disadvantageous also in terms of production efficiency.

### Disclosure of the Invention

A main object of the present invention is to provide a styrene/(meth)acryl multi-component copolymer which can be efficiently produced and which is excellent in sizing effect, proper in low foamability and useful as a surface sizing agent for paper.

In the foregoing present situation, the inventor of the present invention conducted extensive research and inferred that the defects of copolymers conventionally used as a surface sizing agent may be derived from the processes for preparing the copolymers. Stated more specifically, the solution polymerization in an alcohol solvent, among the processes heretofore predominantly used, entails difficulty in producing a copolymer having a homogeneous structure because the constituent monomers of the multi-component copolymer are different in hydrophilicity among them. Consequently the obtained copolymer is likely to produce an unsatisfactory sizing effect. On the other hand, the copolymer produced by emulsion polymerization displays high foamability and produces a low sizing effect presumably due to the emulsifier present in the obtained copolymer. Thus, after various investigations, the inventor found the following. When polymerization is performed under much limited conditions, namely using a specific monomer mixture comprising specific proportions of a styrene compound, half ester of α,β-unsaturated dicarboxylic acid or its salt, (meth)acrylic acid or its salt and optionally lower ester of (meth)acrylic acid, charging a homogeneous solution of the monomer mixture in a specific solvent mixture and a specific polymerization initiator into a reactor, and subjecting them to aqueous solution polymerization a multi-component copolymer is efficiently produced, the copolymer having much lower foamability than conventional surface sizing agents, producing a high sizing effect and bringing about the enhanced adhesion of a toner to finished paper. The present invention has been completed based on these findings.

According to the present invention, there is provided a process for preparing a styrene/(meth)acryl multi-component copolymer, the process comprising subjecting to aqueous solution polymerization a monomer mixture in the presence of a water-insoluble radical polymerization initiator in a solvent mixture of water and at least one lower alcohol selected from ethyl alcohol, n-propyl alcohol and isopropyl alcohol, the monomer mixture comprising (1) 30 to 50 mole% of a styrene compound, (2) 5 to 20 mole% of half ester of α,β-unsaturated dicarboxylic acid or a salt thereof, (3) 35 to 55 mole% of (meth)acrylic acid or a salt thereof and (4) less than 10 mole% of (meth)acrylic acid ester having an alkyl group of 1 to 8 carbon atoms, and the lower alcohol being used in an amount of 20 to 60% by weight and the water being used in an amount of 20 to 120% by weight, based on the total amount of the monomer mixture, wherein a homogeneous solution of said monomer mixture in the solvent mixture and the total amount of water-insoluble polymerization initiator is charged into a reactor and then the mixture is subjected to aqueous solution polymerization.

According to the invention, there is also provided the styrene/(meth)acryl multi-component copolymer produced by the foregoing process.

According to the invention, there is further provided a surface sizing agent for paper containing the foregoing multi-component copolymer having a weight-average molecular weight of 1,000 to 1,000,000 and provided in the form of a completely neutralized salt or a partially neutralized salt with a neutralization degree of 50% or more.

Throughout the specification, the term "(meth)acryl multi-component copolymer" refers to methacryl multi-component copolymer or acryl multi-component copolymer, and the terms "(meth)acrylic acid" and "(meth)acrylic acid ester" refer to methacrylic acid or acrylic acid and methacrylic acid ester or acrylic acid ester, respectively.

Styrene and α-methylstyrene are representative of the styrene compound (hereinafter referred to as "monomer (1)") as one of the essential constituent monomers for the styrene/(meth)acryl multi-component copolymer prepared by the process of the present invention. The proportion of the monomer (1) used is 30 to 50 mole%, preferably 35 to 45 mole%, based on the monomer mixture as the starting component. These styrene compounds can be used either alone or in combination.

Concerning the half ester of α,β-unsaturated dicarboxylic acid or a salt thereof (hereinafter referred to as "monomer (2)") as one of the essential constituent monomers, the half ester of α,β-unsaturated dicarboxylic acid is a half ester of a dicarboxylic acid or an anhydride thereof with an alcohol, examples of the dicarboxylic acid being maleic acid, fumaric acid, itaconic acid and citraconic acid.

Alcohols useful for forming the half ester are not specifically limited, preferably alicyclic monohydric alcohol, aromatic monohydric alcohol, and aliphatic monohydric alcohol having 1 to 8 carbon atoms. Specific examples of such alcohols are n-propyl alcohol, isopropyl alcohol, n-butyl alcohol, iso-butyl alcohol, sec-butyl alcohol, tert-butyl alcohol, pentyl alcohol, hexyl alcohol, cyclohexyl alcohol, octyl alcohol, 2-ethylhexyl alcohol and benzyl alcohol. These alcohols can be used either alone or in combination.

Examples of the salt of half ester of α,β-unsaturated dicarboxylic acid are sodium salt, potassium salt and like alkali metal salts, ammonium salt, aliphatic amine salt having 1 to 12 carbon atoms and alkanolamine salt. These salts can be used either alone or in combination. Of these salts, sodium salt, potassium salt and ammonium salt are preferred.

The half esters of α,β-unsaturated dicarboxylic acid and salts thereof as the monomer (2) can be used either alone or in combination. The proportion of the monomer (2) used is 5 to 20 mole%, preferably 10 to 15 mole%, based on the monomer mixture as the starting component.

The (meth)acrylic acid or a salt thereof (hereinafter referred to as "monomer (3)") as one of the essential constituent monomers is used to solubilize the obtained copolymer. The same species of salts as given above for the monomer (2) can be used as the component (3), namely sodium salt, potassium salt and like alkali metal salts, ammonium salt, aliphatic amine salt having 1 to 12 carbon atoms and alkanolamine salt. These salts can be used either alone or in combination. Of these salts, sodium salt, potassium salt and ammonium salt are preferred.

The (meth)acrylic acids and salts thereof as the monomer (3) can be used either alone or in combination. The proportion of the monomer (3) used is 35 to 55 mole%, preferably 40 to 50 mole%, based on the monomer mixture as the starting component.

The (meth)acrylic acid ester having an alkyl group of 1 to 8 carbon atoms (hereinafter referred to as "monomer (4)") which is used as an optional monomer in the invention is an ester of an alcohol component having 1 to 8 carbon atoms with (meth)acrylic acid. Specific examples are methyl (meth)acrylate, ethyl (meth)acrylate, n-propyl (meth)acrylate, isopropyl (meth)acrylate, n-butyl (meth)acrylate, iso-butyl (meth)acrylate, sec-butyl (meth)acrylate, tert-butyl (meth)acrylate, pentyl (meth)acrylate, hexyl (meth)acrylate, heptyl (meth)acrylate, octyl (meth)acrylate and 2-ethylhexyl (meth)acrylate. These esters can be used either alone or in combination. When the (meth)acrylic acid ester is prepared using an alcohol of more than 8 carbon atoms, the resulting surface sizing agent shows reduced sizing property and high foamability. The proportion of the monomer (4) used is less than 10 mole%, preferably 0.5 to 5 mole%, based on the monomer mixture as the starting component.

In the invention, it is essential that aqueous solution polymerization be carried out using as a solvent a solvent mixture of water and a lower alcohol, and as a polymerization initiator a water-insoluble radical polymerization initiator in order to produce the contemplated styrene/(meth)acryl multi-component copolymer. Since the solvent mixture of water and a lower alcohol is used as the solvent, the obtained copolymer is excellent in homogeneity and well balanced in hydrophilicity and hydrophobicity. Further, during the polymerization reaction, such solvent mixture prevents the produced polymer from deposition and precipitation from the solvent phase and prevents the polymer from becoming heterogeneous which would occur owing to the buildup of block structure in the molecules of produced polymer. The water-insoluble radical polymerization initiator used herein also contributes to the formation of a highly homogeneous copolymer. If a persulfate such as potassium persulfate or ammonium persulfate or a water-soluble azo compound is used in place of the water-insoluble radical polymerization initiator, it is likely that a heterogeneous multi-component copolymer with poor sizing property is produced. Hence these initiators are unsuitable.

According to the invention, the polymerization reaction is conducted under such limited conditions to give a styrene/(meth)acryl multi-component copolymer showing low foamability, imparting an excellent sizing effect to paper and bringing about higher adhesion of a toner to finished paper, that is, a copolymer with remarkable properties as a surface sizing agent.

Examples of the lower alcohol as the constituent of said solvent mixture is at least one of ethyl alcohol, n-propyl alcohol and isopropyl alcohol. Of these alcohols, isopropyl alcohol is the most suitable. The solvent mixture has a composition wherein the lower alcohol accounts for 20 to 60% by weight, preferably 30 to 50% by weight, based on the total amount of the monomer mixture, and water accounts for 20 to 120% by weight, preferably 30 to 100% by weight, based on the total amount of the monomer mixture. While a ratio of water to a lower alcohol can be properly selected within said range, a preferred water : lower alcohol ratio (weight ratio) is 4 : 1 to 2 : 5.

The water-insoluble polymerization initiator for use in the invention includes water-insoluble azo compounds and water-insoluble organic peroxides. Among these initiators, more specific examples of water-insoluble azo compounds are 2,2'-azobisisobutyronitrile and 2,2'-azobis-2,4-methylvaleronitrile, and more specific examples of water-insoluble organic peroxides are benzoyl peroxide, cumene hydroperoxide, tert-butyl hydroperoxide, dicumyl peroxide and lauryl peroxide. The amount of the water-insoluble polymerization initiator used can be properly selected according to the polymerization rate, the molecular weight of the obtained copolymer and other factors. A suitable range is 0.1 to 5% by weight based on the total monomer.

In the invention, it is essential that the total amount of the water-insoluble polymerization initiator be admixed with a homogeneous solution of the total monomer in the solvent mixture to effect polymerization reaction. If the polymerization initiator is continuously or intermittently added dropwise or supplied dividedly in the polymerization reaction, it would be difficult to obtain the contemplated multi-component copolymer excellent in homogeneity. Hence these methods are undesirable.

The multi-component copolymer of the invention can be prepared, for example, by the following process.

First, a homogeneous solution of said monomers (1) to (4) in the solvent mixture and the total amount of the water-insoluble polymerization initiator are charged into a reactor and thoroughly mixed. Then, the reaction system is heated in the presence of inert gas to effect aqueous solution polymerization under reaction conditions of a temperature of 80 to 100°C for 1 to 10 hours. Useful inert gases are nitrogen, carbon dioxide and argon. A chain transfer agent such as mercaptan can be used in the polymerization.

The obtained multi-component copolymer has a weight-average molecular weight of 1,000 to 1,000,000, preferably 2,000 to 100,000. When the weight-average molecular weight is less than 1,000, the sizing effect is not satisfactory, whereas above 1,000,000, the aqueous solution of the polymer tends to excessively increase in viscosity to an extent of reducing the application efficiency.

The surface sizing agent for paper of the invention is an aqueous solution containing the multi-component copolymer produced by said process and having a weight-average molecular weight of 1,000 to 1,000,000 as an active ingredient. The multi-component copolymer produced by said process is used as a surface sizing agent either by itself or by dilution with water to a suitable concentration without or after isolation.

For use as a surface sizing agent, the multi-component copolymer prepared by the process of the invention is provided in the form of a completely neutralized salt or a partially neutralized salt with a neutralization degree of about 50% or more. When the monomer (2) or (3) among the starting monomers is used in the form of a salt, the produced multi-component copolymer per se can be used as an active ingredient of the sizing agent. When the neutralization degree is increased or when the monomer used is not a salt, a salt may be formed from the copolymer produced by the polymerization. To form a salt after polymerization, the required basic compound may be added to the aqueous medium containing the copolymer. Useful species of the salt include sodium salt, potassium salt and like alkali metal salts, ammonium salt, aliphatic amine salt having 1 to 12 carbon atoms and alkanolamine salt, which are exemplified above for the salts of the monomers (2) and (3). These salts can be used either alone or in combination. Of these salts, sodium salt, potassium salt and ammonium salt are preferred.

The concentration of the multi-component copolymer in the surface sizing agent of the invention is not specifically limited. The surface sizing agent may be diluted with water to a suitable concentration, e.g., according to the kind of base paper or the contemplated application amount. Usually the surface sizing agent is used as an aqueous solution having a concentration of the multi-component copolymer solids in the range of 0.1 to 0.5% by weight.

Optionally the surface sizing agent of the invention may contain oxidized starch, sodium alginate, carboxymethyl cellulose, acrylamide polymer and polyvinyl alcohol in addition to said copolymer. After these components are mixed with the aqueous solution containing the multi-component copolymer, the mixture is used as a surface sizing agent. These optional components can be used either alone or in combination. The amounts of the components used are approximately the same as used in conventional surface sizing agents. The total amount of these optional components can be generally 5 to 30 times the weight of the copolymer (based on the solids).

The base papers to be coated with the surface sizing agent of the invention are not specifically limited and the selection is not affected by pulps, fillers, internal sizing agents, pH in papermaking, paper-strengthening agents and retention aid. Examples of such base papers are those useful for woodfree papers or coated papers and made under acidic conditions, those useful for woodfree papers or coated papers and made under neutral conditions by incorporating therein an internal sizing agent such as alkyl ketene dimer or alkenyl succinic anhydride, those useful for liners, and so on. The surface sizing agent of the invention can be suitably used also for base papers containing recovered wastepaper.

The surface sizing agent of the invention is applied to the foregoing various base papers by conventional coating methods such as immersion coating, size press coating, calender coating and spray coating. The application amount of the sizing agent based on the solid content of the multi-component copolymer is 0.001 to 5 g/m², preferably 0.005 to 1 g/m².

The process for preparing the multi-component copolymer according to the invention can efficiently produce a specific styrene/(meth)acryl multi-component copolymer which is useful as an active ingredient of a surface sizing agent. The obtained copolymer is highly soluble in water, and the surface sizing agent containing the copolymer as an active ingredient exhibits excellent sizing property and can be easily used on an apparatus because substantially no foaming is involved in application. Well sized papers can be readily provided by application of said surface sizing agent. A toner is excellent in adhesion to electrophotography papers coated with the surface sizing agent of the invention.

### Best Mode for Carrying Out the Invention

The present invention is described below in more detail with reference to the following Examples and Comparative Examples to which the present invention is not limited at all. The percentages and parts in the Examples are all by weight unless specifically indicated.

### Example 1

A flask equipped with a stirrer, condenser, dropping funnel, nitrogen inlet tube and thermometer was charged with 83.4 parts (40 mole%) of styrene, 31.7 parts (10 mole%) of half ester of maleic anhydride with isopropyl alcohol (monoisopropyl maleate), 77.5 parts (45 mole%) of methacrylic acid, 12.8 parts (5 mole%) of butyl acrylate, 69.8 parts of isopropyl alcohol, 69.8 parts of water and 6.2 parts of 2,2'-azobisisobutyronitrile. The mixture was heated at 80 to 85°C for 5 hours with stirring in a nitrogen stream.

To the obtained reaction product was added water and 74.4 parts of 28% aqueous ammonia for neutralization (in an amount to achieve 135% neutralization degree of free carboxyl group), whereby an aqueous solution of water-soluble multi-component copolymer having a nonvolatile content of 20.5% was obtained.

The obtained aqueous solution gave a yellow transparent appearance, and had a pH of 9.0 and a viscosity of 1200 mPa.s (cps) at 25°C. Table 1 below shows the compositions of monomers, solvents and polymerization initiators (catalyst). The amounts of the solvent and the catalyst are expressed in parts by weight per 100 parts of the monomer mixture. Table 2 shows the solubility of the resin and other characteristics in the aqueous solution after neutralization with ammonia.

### Examples 2-8

The same reaction as in Example 1 was repeated with the exception of using the monomers shown in Table 1 with the indicated compositions, whereby each multi-component copolymer was produced. An aqueous solution of each multi-component copolymer with the nonvolatile content as shown in Table 2 was obtained by adding to the solution of the multi-component copolymer water and 28% aqueous ammonia in amounts sufficient to achieve 135% neutralization degree of free carboxyl group in the multi-component copolymer. Table 2 shows the solubility of the resin and other characteristics in the aqueous solution after neutralization with ammonia.

### Comparative Examples 1-9

The same reaction as in Example 1 was repeated with the exception of using the monomers shown in Table 1 with the indicated compositions, whereby each multi-component copolymer was produced. An aqueous solution of each multi-component copolymer with the nonvolatile content as shown in Table 2 was obtained by adding to the solution of the multi-component copolymer water and 28% aqueous ammonia in amounts sufficient to achieve 135% neutralization degree of free carboxyl group in the multi-component copolymer. Table 2 shows the solubility of the resin and other characteristics in the aqueous solution after neutralization with ammonia. Since the solubility of the resin was poor after the addition of ammonia in Comparative Examples 1, 3, 8 and 9, it was impossible to evaluate the characteristics of the reaction product.

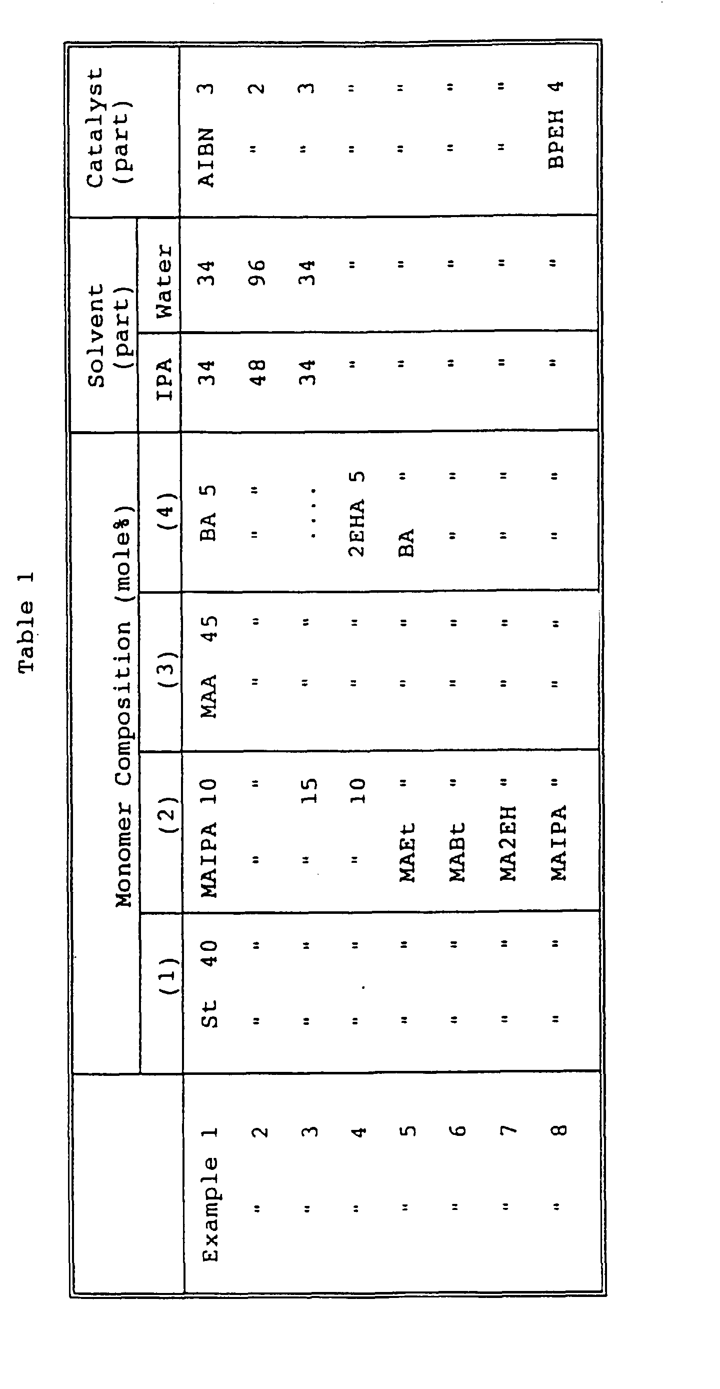

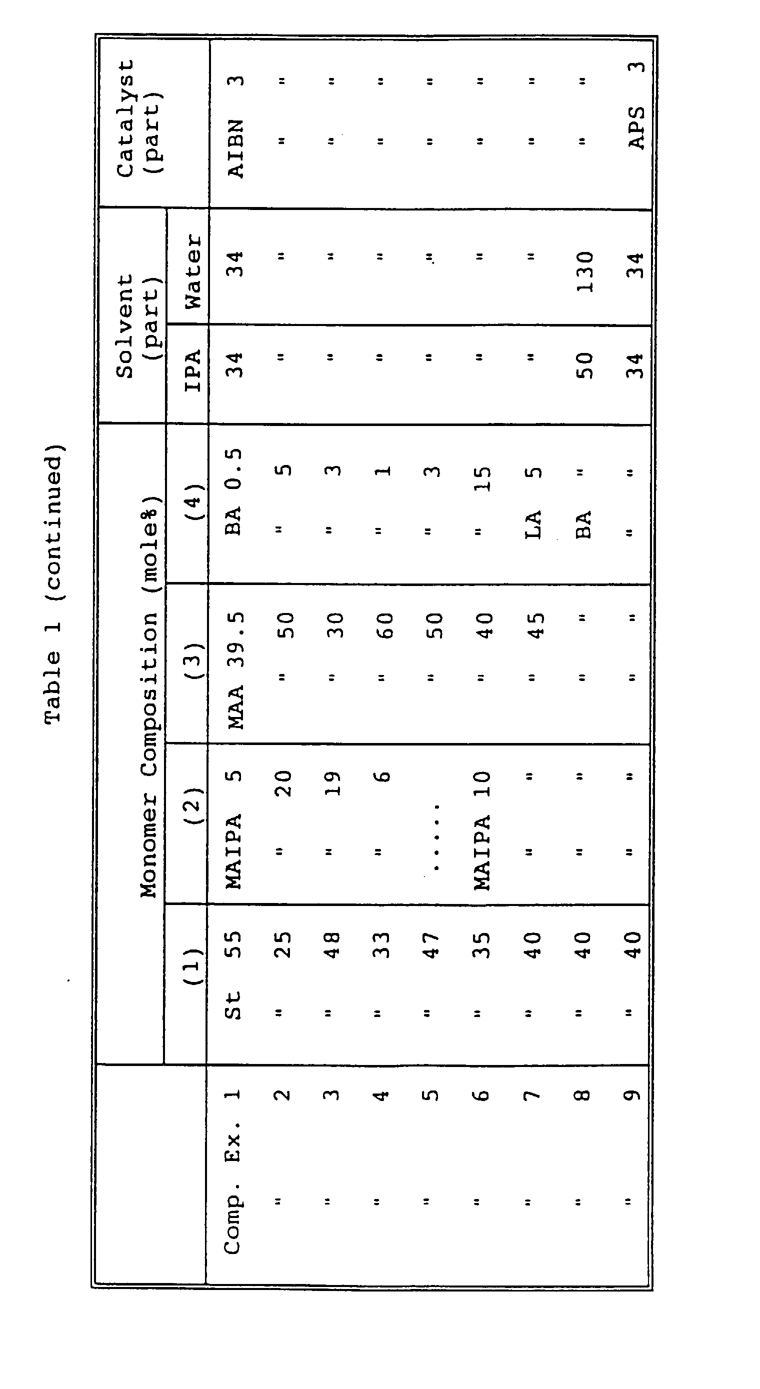

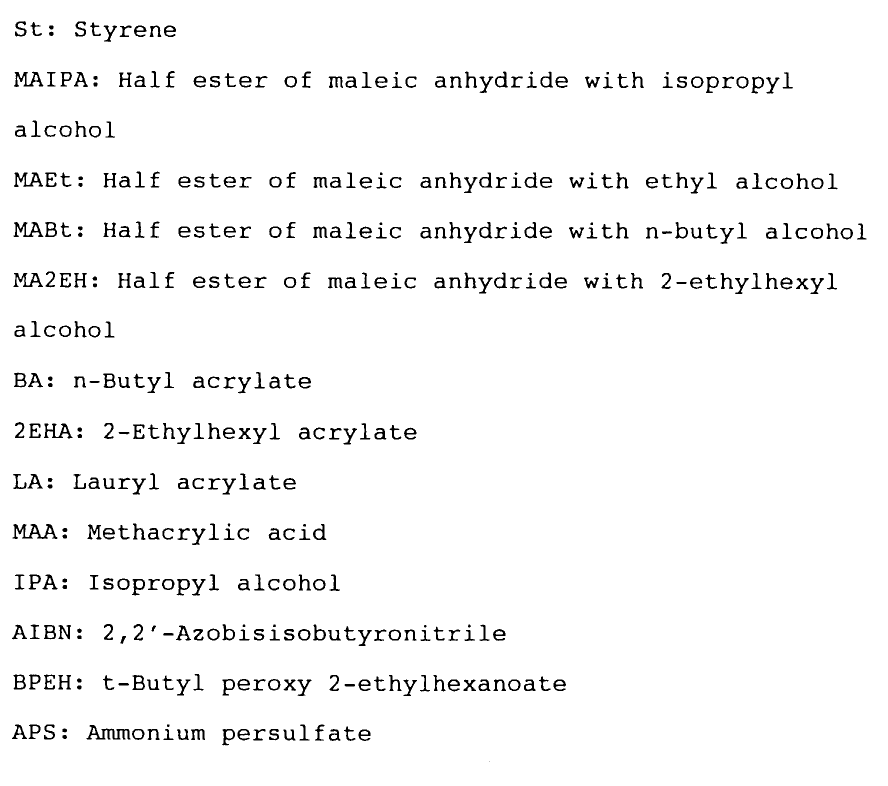

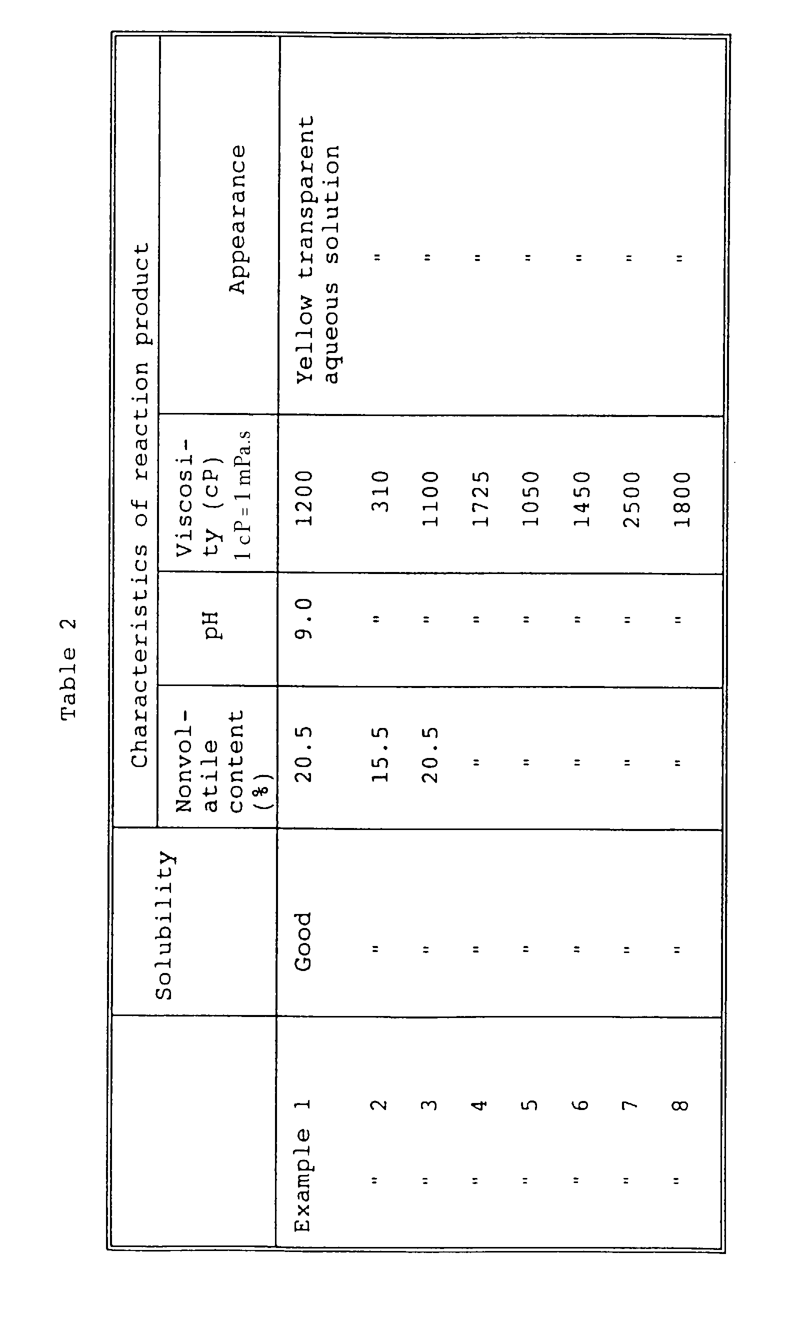

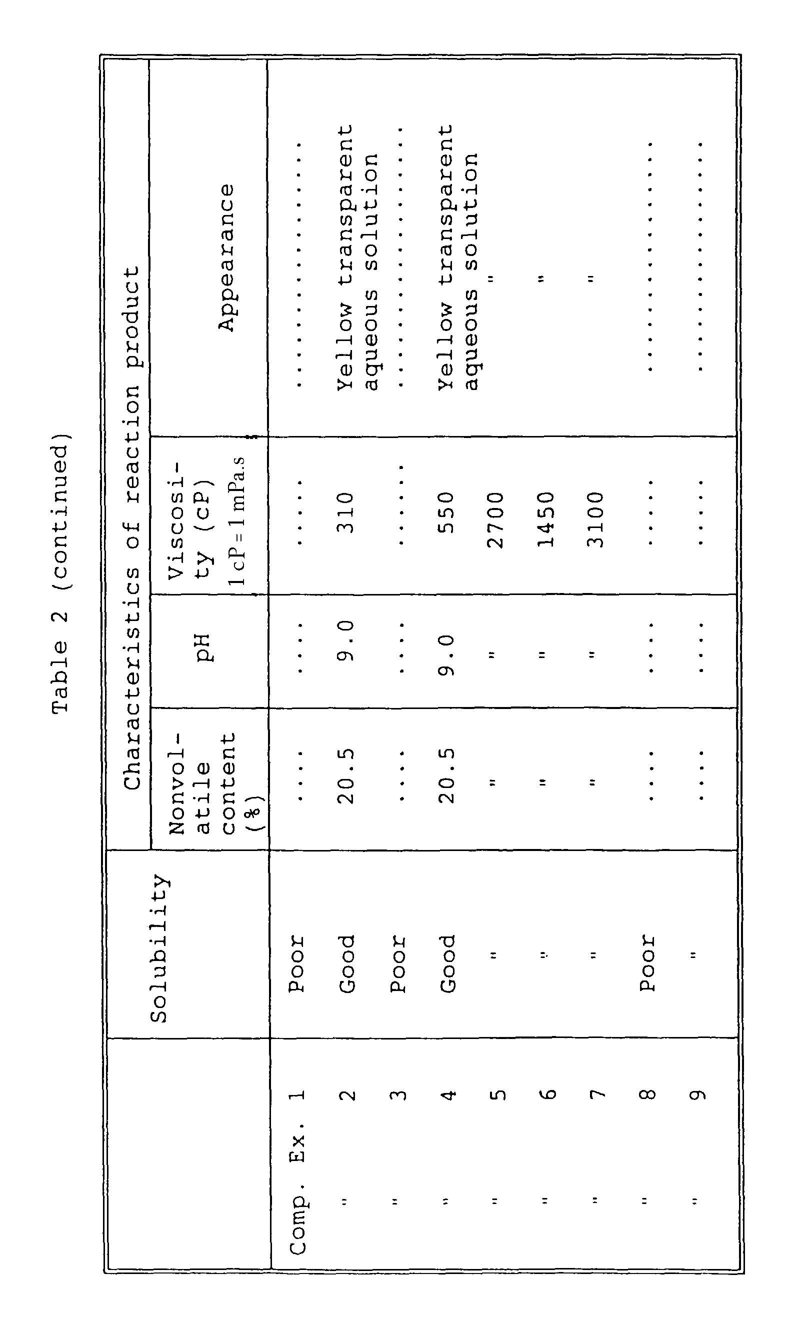

The above-obtained aqueous solutions of the multi-component copolymers were evaluated as the surface sizing agent by the following method. The results are shown in Table 3.

### Method of evaluation of sizing property

### (A) Base paper

### 1. Acidic paper

Weighing 81 g/m², Stöckigt sizing degree 0 sec., chemical compound incorporated (ratio based on the pulp): talc 20%, fortified rosin sizing agent (product of Arakawa Chemical Industries Ltd., trade name "SIZEPINE E") 0.05%, aluminum sulfate 2.5%

### 2. Neutral paper

Weighing 81 g/m², Stöckigt sizing degree 0 sec., chemical compounds incorporated (ratio based on the pulp): calcium carbonate 20%, alkenyl succinic anhydride sizing agent (product of Arakawa Chemical Industries Ltd., trade name "SIZEPINE SA 850") 0.05%, aluminum sulfate 0.5%, cationic starch 0.4%, anionic retention aid (product of Arakawa Chemical Industries Ltd., trade name "KW-504") 0.01%

### (B) Surface Sizing

Apparatus: Labo-size press
Surface sizing agent: A mixture of an aqueous solution of each multi-component copolymer and a solution of oxidized starch in such ratio that the application amount of oxidized starch calculated as solids was 1.8 g/m² and the application amount of each copolymer calculated as solids was as shown in Table 3 below.
Drying conditions: Rotary dryer operated at 110°C for 1 minute

### (C) Evaluation of paper quality

Stöckigt sizing degree: according to JIS P-8122
Pen writing sizing test: according to the paper pulp test method of JAPAN TAPPI standard No. 12-76

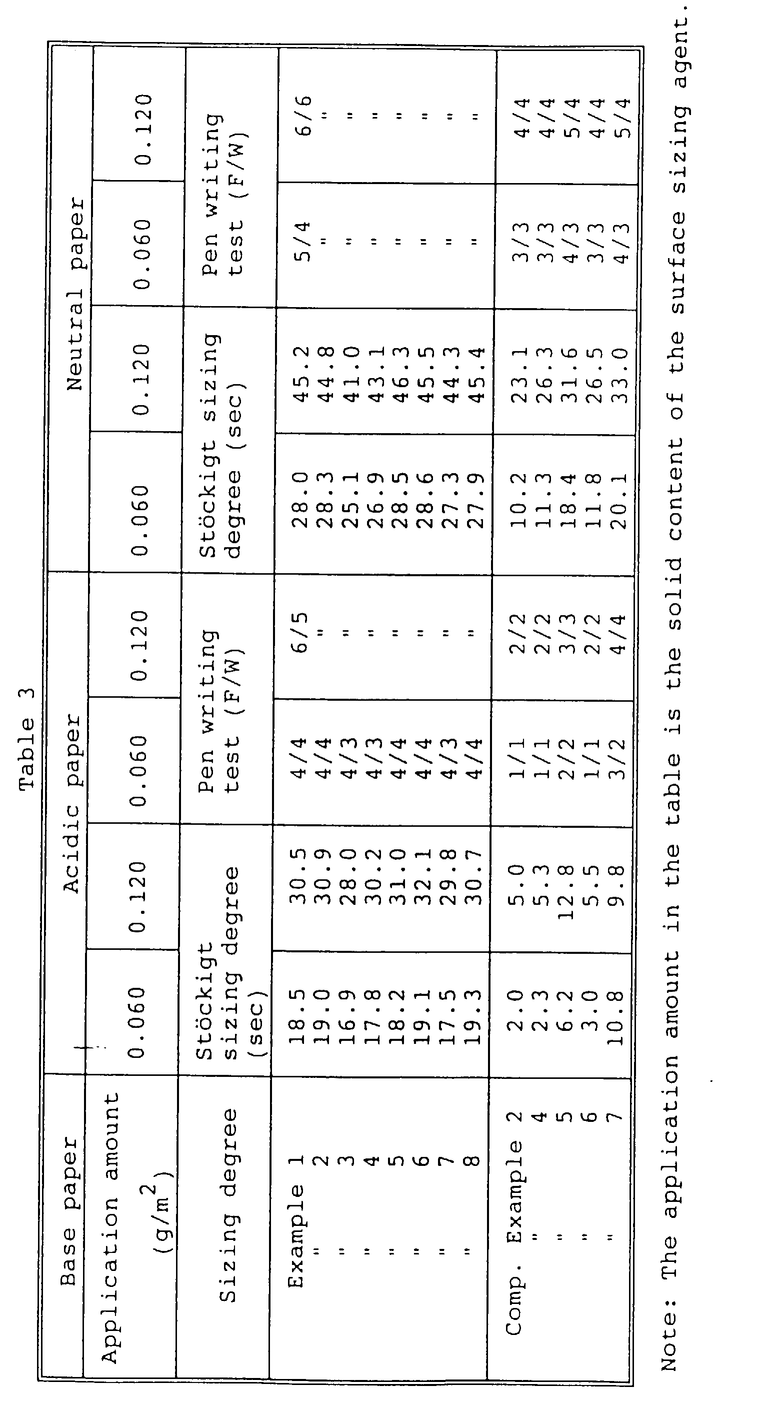

## Claims

1. A process for preparing a styrene/(meth)acryl multi-component copolymer, the process comprising subjecting to aqueous solution polymerization a monomer mixture in the presence of a water-insoluble radical polymerization initiator in a solvent mixture of water and at least one lower alcohol selected from ethyl alcohol, n-propyl alcohol and isopropyl alcohol, the monomer mixture comprising (1) 30 to 50 mole% of a styrene compound, (2) 5 to 20 mole% of half ester of α,β-unsaturated dicarboxylic acid or a salt thereof, (3) 35 to 55 mole% of (meth)acrylic acid or a salt thereof and (4) less than 10 mole% of (meth)acrylic acid ester having an alkyl group of 1 to 8 carbon atoms, and the lower alcohol being used in an amount of 20 to 60% by weight and the water being used in an amount of 20 to 120% by weight, based on the total amount of the monomer mixture, wherein a homogeneous solution of said monomer mixture in the solvent mixture and the total amount of water-insoluble polymerization initiator is charged into a rector and then the mixture is subjected to aqueous solution polymerization.

2. The process according to claim 1, wherein the monomer mixture contains the (meth)acrylic acid ester having an alkyl group of 1 to 8 carbon atoms in an amount of 0.5 to 5 mole%.

3. The process according to claim 1, wherein the lower alcohol in the solvent mixture is isopropyl alcohol.

4. The styrene/(meth)acryl multi-component copolymer produced by any one of the processes defined in claims 1 to 3.

5. A surface sizing agent for paper, the agent containing the styrene/(meth)acryl multi-component copolymer produced by Any one of the processes defined in claims 1 to 3, wherein the copolymer has a weight-average molecular weight of 1,000 to 1,000,000 and is provided in the form of a completely neutralized salt or a partially neutralized salt with a neutralization degree of 50% or more.

## Patentansprüche

1. Verfahren zur Herstellung eines Styrol/(Meth)Acryl-Multikomponenten-Copolymeren, welches umfaßt, daß eine Monomerenmischung in der Gegenwart eines wasserunlöslichen radikalischen Polymerisationsinitiators in einer Lösungsmittelmischung aus Wasser und mindestens einem niedrigen Alkohol, ausgewählt aus Ethylalkohol, n-Propylalkohol und Isopropylalkohol, einer Polymerisation in wäßriger Lösung unterzogen wird, wobei die Monomerenmischung umfaßt: (1) 30 bis 50 Mol-% einer Styrolverbindung, (2) 5 bis 20 Mol-% eines Halbesters einer α,β-ungesättigten Dicarbonsäure oder eines Salzes davon, (3) 35 bis 55 Mol-% (Meth)Acrylsäure oder ein Salz davon sowie (4) weniger als 10 Mol-% eines (Meth)Acrylsäureesters, welcher eine Alkylgruppe mit 1 bis 8 Kohlenstoffatomen aufweist, und wobei der niedrige Alkohol in einer Menge von 20 bis 60 Gew.-% und das Wasser in einer Menge von 20 bis 120 Gew.-%, bezogen auf die Gesamtmenge der Monomerenmischung, verwendet werden, wobei eine homogene Lösung dieser Monomerenmischung in der Lösungsmittelmischung sowie die Gesamtmenge des wasserunlöslichen Polymerisationsinitiators in einen Reaktor eingefüllt werden und die Mischung anschließend der Polymerisation in wäßriger Lösung unterzogen wird.

2. Verfahren gemäß Anspruch 1, wobei die Monomerenmischung den (Meth)Acrylsäureester, welcher eine Alkylgruppe mit 1 bis 8 Kohlenstoffatomen aufweist, in einer Menge von 0,5 bis 5 Mol-% enthält.

3. Verfahren gemäß Anspruch 1, wobei der niedrige Alkohol in der Lösungsmittelmischung Isopropylalkohol ist.

4. Styrol/(Meth)Acryl-Multikomponenten-Copolymer, hergestellt mittels irgendeines der in den Ansprüchen 1 bis 3 definierten Verfahren.

5. Oberflächenversiegelungsmittel für Papier, welches das mittels irgendeines der in den Ansprüchen 1 bis 3 definierten Verfahren hergestellte Styrol/(Meth)Acryl-Multikomponenten-Copolymer enthält, wobei dieses Copolymer ein massengemitteltes Molekulargewicht von 1.000 bis 1.000.000 aufweist und in Form eines vollständig neutralisierten Salzes oder eines teilweise neutralisierten Salzes mit einem Neutralisierungsgrad von 50% oder mehr vorgesehen ist.

## Revendications

1. Procédé de préparation d'un copolymère multicomposant styrène-(méth)acrylique, le procédé comprenant la soumission à une polymérisation en solution aqueuse d'un mélange de monomères en présence d'un initiateur de polymérisation radicalaire insoluble dans l'eau dans un mélange solvant d'eau et d'au moins un alcool inférieur choisi parmi l'alcool éthylique, l'alcool n-propylique et l'alcool isopropylique, le mélange de monomères comprenant (1) 30 à 50% en moles d'un composé du styrène, (2) 5 à 20% en moles d'un semi-ester d'acide dicarboxylique α,β-insaturé ou d'un sel de celui-ci, (3) 35 à 55% en moles d'acide (méth)acrylique ou d'un sel de celui-ci, et (4) moins de 10% en moles d'ester d'acide (méth)acrylique ayant un groupe alkyle de 1 à 8 atomes de carbone, et l'alcool inférieur étant utilisé en une quantité de 20 à 60% en poids et l'eau étant utilisée en une quantité de 20 à 120% en poids, par rapport à la quantité totale du mélange de monomères, dans lequel une solution homogène dudit mélange de monomères dans le mélange solvant et la quantité totale d'initiateur de polymérisation insoluble dans l'eau est chargée dans un réacteur et ensuite, le mélange est soumis à une polymérisation en solution aqueuse.

2. Procédé suivant la revendication 1, dans lequel le mélange de monomères contient l'ester d'acide (méth)acrylique ayant un groupe alkyle de 1 à 8 atomes de carbone en une quantité de 0,5 à 5% en moles.

3. Procédé suivant la revendication 1, dans lequel l'alcool inférieur dans le mélange solvant est l'alcool isopropylique.

4. Copolymère multicomposant styrène-(méth)acrylique produit par l'un quelconque des procédés suivant les revendications 1 à 3.

5. Agent d'apprêt de surface pour papier, l'agent contenant le copolymère multicomposant styrène-(méth)acrylique produit par l'un quelconque des procédés suivant les revendications 1 à 3, dans lequel le copolymère a un poids moléculaire moyen en poids de 1 000 à 1 000 000. et est fourni sous la forme d'un sel complètement neutralisé ou d'un sel partiellement neutralisé ayant un degré de neutralisation de 50% ou plus.
